# EUROPEAN PATENT SPECIFICATION

(11) **EP 4 323 257 B1**
(45) Date of publication and mention of the grant of the patent: **28.05.2025**
(21) Application number: 22719370.3
(22) Date of filing: 13.04.2022
(51) Int. Cl.: B62D 13/04, B62D 13/00

(54) **A HYDRAULIC SYSTEM, A VEHICLE AND A METHOD FOR OPERATING A HYDRAULIC SYSTEM**
HYDRAULIKSYSTEM, FAHRZEUG UND VERFAHREN ZUM BETRIEB EINES HYDRAULIKSYSTEMS
SYSTÈME HYDRAULIQUE, VÉHICULE ET PROCÉDÉ DE FONCTIONNEMENT D'UN SYSTÈME HYDRAULIQUE

(30) Priority: 13.04.2021 NL 2027955
(43) Date of publication of application: 21.02.2024
(73) Proprietor: V.S.E. Vehicle Systems Engineering B.V., 3905 NV Veenendaal (NL)
(72) Inventor: DE ZAAIJER, Richard Johannes Wilhelmus, 3905NV Veenendaal (NL); DUYNSTÉE, Merlijn Jean, 3905NV Veenendaal (NL)
(74) Representative: IP Maison
(86) International application number: PCT/NL2022/050203
(87) International publication number: WO 2022/220680

(56) References cited:
- WO-A1-2006/102514
- US-A- 2 555 649
- US-A- 5 615 748
- US-A1- 2011 175 322
- US-A1- 2017 291 636

## Description

### FIELD OF THE INVENTION

The invention relates to a vehicle including a plurality of pivotable wheels that need to be synchronized. The invention further relates to a hydraulic system allowing to synchronize the plurality of pivotable wheels and a method for operating the hydraulic system.

### BACKGROUND OF THE INVENTION

Vehicles, such as trailers, may have pivotable wheels on either side of the vehicle to improve the maneuverability of the vehicle. Pivoting of the wheels may be passive in reaction to heading of the vehicle and forces between the road and the wheels similar to caster wheels but may also be actively controlled using a steering system.

As is known from caster wheels, when a wheel is subjected to forces between road and wheel only, the wheel on one side of the vehicle will normally move to a maximum steering angle that is opposite to a maximum steering angle of the wheel on the other side of the vehicle resulting in a high chance that the vehicle becomes unstable and/or no longer steerable causing dangerous situations.

To prevent this from happening, it is known to provide a mechanical track-rod connecting one or more wheels at one side of the vehicle with one or more wheels at an opposite side thereby synchronizing their movement and forcing wheels on both side to steer in the same direction. Also, US2017/0291636 discloses relevant prior art. US5615748, US2555649, US2011/175322 and WO2006/102514 disclose further relevant prior art.

However, a mechanical track-rod may have some disadvantages. For instance, when both wheels have an independent wheel suspension, the mechanical track rod may interfere with different responses from the respective wheel suspensions. Further, the mechanical track-rod may occupy a lot of space. Both disadvantages result in a reduced design freedom of the vehicle.

### SUMMARY OF THE INVENTION

In view of the above it is an object of the invention to provide a vehicle with synchronized pivotable wheels that provides more design freedom of the vehicle.

According to an embodiment of the invention, there is provided a hydraulic system for a vehicle comprising:
- a first cylinder with a cylinder housing, a rod moveably arranged inside the cylinder housing, and a piston mounted to the rod inside the cylinder housing and separating a first chamber in the cylinder housing from a second chamber, wherein the first cylinder is connectable to a first wheel such that pivoting of the first wheel corresponds to translating of the rod relative to the cylinder housing,
- a second cylinder with a cylinder housing, a rod moveably arranged inside the cylinder housing, and a piston mounted to the rod inside the cylinder housing and separating a first chamber in the cylinder housing from a second chamber, wherein the second cylinder is connectable to a second wheel such that pivoting of the second wheel corresponds to translating of the rod relative to the cylinder housing,
- a first hydraulic line between the first chamber of the first cylinder and the first chamber of the second cylinder to synchronize motion of the rod of the first cylinder with motion of the rod of the second cylinder,
- a second hydraulic line between the second chamber of the first cylinder and the second chamber of the second cylinder to synchronize motion of the rod of the first cylinder with motion of the rod of the second cylinder,
- a hydraulic supply system operable to selectively supply hydraulic fluid to the first hydraulic line and the second hydraulic line,
- a first centering device operable to urge the rod of the first cylinder to a center position,
- a second centering device configured to urge the rod of the second cylinder to a center position, and
- a control unit configured to control operation of the hydraulic supply system, the first centering device, and the second centering device, wherein the control unit has a reset mode allowing to operate the hydraulic supply system while the first and second centering devices are operated to urge the rod of the first cylinder and the rod of the second cylinder, respectively, to their respective center positions to reset the synchronization between the motion of the rod of the first cylinder and the motion of the rod of the second cylinder.

The provision of the first hydraulic line between a chamber of the first cylinder and a chamber of the second cylinder and a second hydraulic line between another chamber of the first cylinder and another chamber of the second cylinder allows to synchronize motion of the respective rods of the first and second cylinders and thereby synchronize motion of the first and second wheel. Hence, the first and second hydraulic lines serve as a hydraulic track-rod which provides the advantage that the first and second hydraulic lines occupy less space than a mechanical track-rod and can be arranged in many different ways providing more design freedom than a mechanical track-rod. Further, the first and second hydraulic lines may not be affected by operation of independent wheel suspensions.

The invention is further based on the insight that merely providing a first and second hydraulic line and filling the first and second hydraulic lines and corresponding chambers with sufficient hydraulic liquid will not provide a satisfactory solution as deviations from an ideal synchronization situation will start to occur and/or will increase due to for instance leakage in the first cylinder, the second cylinder and/or the first and second hydraulic lines.

To this end, the hydraulic system according to the invention provides a hydraulic supply system, a first centering device, a second centering device, and a control unit allowing to correct for deviations. The hydraulic supply system not only allows to supply hydraulic fluid to the first and/or second hydraulic line to compensate for any losses that occurred over time, but in combination with the first and second centering devices also allows to compensate for any synchronization deviations. As a result, the vehicle is now able to reset the hydraulic track-rod when the first and second centering devices keep the first and second wheel in a driving straight-ahead position which is the position where the cylinders are synchronized and in which the forces on the wheels and thus the rods of the first and second cylinder are typically the lowest making the reset as easy as possible.

It is further noted that the mentioned center positions of the respective rods of the first and second cylinders correspond to substantially straight-ahead driving positions of the respective first and second wheel. Hence, embodiments in which said center position does not correspond to a mid-position of the respective piston in the respective cylinder housing also fall within the scope of the invention.

In an embodiment, the hydraulic supply system comprises an equalizing valve between the first hydraulic line and the second hydraulic line allowing fluid communication between the first hydraulic line and the second hydraulic line at least during the reset mode.

In an embodiment, the hydraulic system further comprises an accumulator connected to the first hydraulic line and/or the second hydraulic line. An advantage of the accumulator may be that it can prevent extreme mechanical loads in the hydraulic system when for instance a wheel hits an obstacle such as a kerb or relatively large and rigid object on the road.

In an embodiment, the hydraulic system comprises a steering system to steer the first and second wheel. An advantage thereof is that the first and second wheel can be actively controlled providing more control over the respective vehicle compared to passively controlled first and second wheels in absence of a steering system.

In an embodiment, the steering system comprises a first steering cylinder connected to the first cylinder for steering the first wheel, e.g. by connecting the first steering cylinder to the rod of the first cylinder. The control unit is preferably configured to control operation of the first steering cylinder.

In an embodiment, the first steering cylinder includes a cylinder housing, a steering rod moveably arranged inside the cylinder housing and connected to the first culinder, e.g. the rod of the first cylinder, and a steering piston mounted to the steering rod inside the cylinder housing and separating a third chamber in the cylinder housing from a fourth chamber.

In an embodiment, the steering system comprises a second steering cylinder connected to the second cylinder for steering the second wheel, e.g. by connecting the second steering cylinder to the rod of the second cylinder. The control unit is preferably configured to control operation of the second steering cylinder.

In an embodiment, the second steering cylinder includes a cylinder housing, a steering rod moveably arranged inside the cylinder housing and connected to the second cylinder, e.g. the rod of the second cylinder, and a steering piston mounted to the steering rod inside the cylinder housing and separating a third chamber in the cylinder housing from a fourth chamber.

In an embodiment, the hydraulic supply system includes a steering portion configured to pressurize the third or fourth chambers of the first and/or second steering cylinder.

In an embodiment, the steering system is integrated into the first and/or second cylinders.

For instance, the first steering cylinder may be integrated into the first cylinder, so that the first cylinder includes a track-rod portion housing the corresponding first chamber, the piston and the second chamber, and a steering portion with the corresponding third chamber, the fourth chamber, and the steering piston.

Additionally, or alternatively, the second steering cylinder may be integrated into the second cylinder, so that the second cylinder includes a track-rod portion housing the corresponding first chamber, the piston and the second chamber, and a steering portion with the corresponding third chamber, the fourth chamber, and the steering piston.

In an embodiment, the first cylinder and the first centering device form an integrated component.

In an embodiment, the second cylinder and the second centering device form an integrated component.

Hence, steering and centering are separate functions that may be provided in a single component but may also be provided using separate devices that are interconnected.

Further, in an embodiment, centering may be provided in a mechanical way not requiring any sensors, alternatively referred to as passive centering, but may also include the use of sensors, alternatively referred to as active centering in which control of the centering is based on sensor measurements.

In an embodiment, the first steering cylinder or the steering portion of the first cylinder forms the first centering device.

In an embodiment, the second steering cylinder or the steering portion of the second cylinder forms the second centering device.

Hence, centering may be provided by the steering system. This may require the provision of sensors to determine whether the rods are in their center position.

The invention also relates to a vehicle comprising:
- a pivotable first wheel,
- a pivotable second wheel, and
- a hydraulic system according to the invention,
wherein the first cylinder is connected to the first wheel, and wherein the second cylinder is connected to the second wheel.

In an embodiment, the rod of the first cylinder is connected to the first wheel.

In an embodiment, the rod of the second cylinder is connected to the second wheel.

In an embodiment, the vehicle further comprises a hydraulic pressure source to supply pressure to the hydraulic supply system.

In an embodiment, the first wheel is arranged at one side of the vehicle, and wherein the second wheel is arranged at an opposite side of the vehicle.

The invention further relates to a method for operating a hydraulic system according to the invention, wherein the method comprises the following steps:
a. filling the first hydraulic line and the first chambers of the first and second cylinder, respectively, with hydraulic fluid,
b. filling the second hydraulic line and the second chambers of the first and second cylinder, respectively, with hydraulic fluid,
c. blocking hydraulic fluid flow from the first hydraulic line and the first chambers of the first and second cylinder,
d. blocking hydraulic fluid flow from the second hydraulic line and the second chambers of the first and second cylinder,
e. centering the rod of the first cylinder and centering the rod of the second cylinder, and
f. synchronizing movement of the rod of the first cylinder with the rod of the second cylinder by allowing fluid to flow in or out of the first hydraulic line and/or the second hydraulic line when the rod of the first cylinder and the rod of the second cylinder are centered.

In an embodiment, step f. is carried out by allowing fluid communication between the first hydraulic line and the second hydraulic line.

In an embodiment, the hydraulic system is part of a vehicle with the first cylinder connected to a pivotable first wheel and the second cylinder connected to a pivotable second wheel, and wherein step e. and f. are carried out when the vehicle is driving straight-ahead substantially corresponding to a centered first cylinder and a centered second cylinder.

In an embodiment, the rod of the first cylinder is connected to the pivotable first wheel.

In an embodiment, the rod of the second cylinder is connected to the pivotable second wheel.

In an embodiment, in case a pressure in the first hydraulic line or a pressure in the second hydraulic line drops below a predetermined value, the first cylinder and the second cylinder are held centered.

### BRIEF DESCRIPTION OF THE DRAWINGS

The invention will now be described in a non-limiting way by reference to the accompanying drawings in which like parts are indicated by like reference symbols, and in which:
- Fig. 1: schematically depicts a part of a vehicle according to an embodiment of the invention; and
- Fig. 2: schematically depicts a hydraulic system for a vehicle according to another embodiment of the invention.

### DETAILED DESCRIPTION OF THE INVENTION

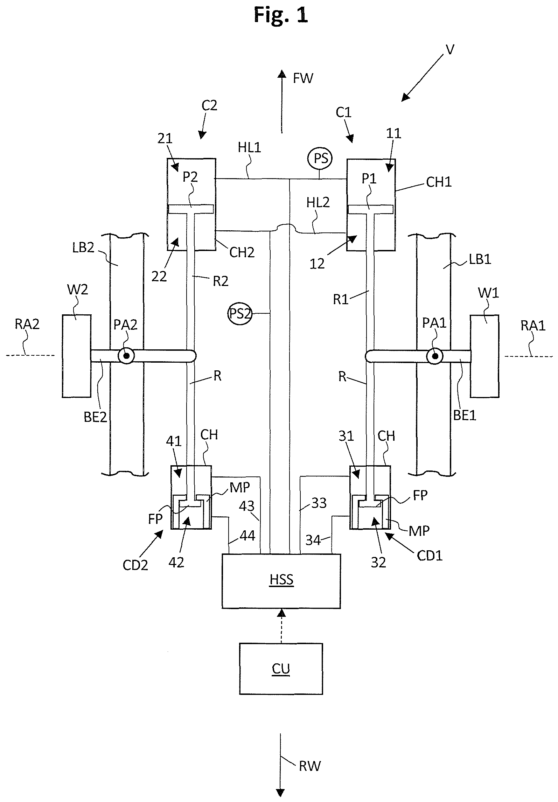

Fig. 1 schematically depicts a vehicle V according to an embodiment of the invention. The vehicle may be any type of vehicle including but not limited to:
- a car,
- a bus,
- a truck, and
- a (semi-)trailer.

The vehicle V includes a chassis of which in Fig. 1 only longitudinal beams LB1 and LB2 are depicted. The specific construction of the chassis is not essential to the invention and will thus not be described in further detail.

The vehicle V comprises a first wheel W1 and a second wheel W2. Considering a forward moving direction FW (and a corresponding rearward moving direction RW), the first wheel W1 is arranged at a right side of the vehicle V and the second wheel 2 is arranged at a left side of the vehicle V. Both the first wheel W1 and the second wheel W2 are rotatable about a respective first rotation axis RA1 and a second rotation axis RA2 for rolling/driving purposes. Both the first wheel W1 and the second wheel W2 are pivotably mounted to the chassis to pivot about a corresponding pivot axis PA1, PA2 to improve maneuverability. The first and second rotation axis RA1, RA2 extend substantially in horizontal direction. The first and second pivot axis PA1, PA2 extend substantially in vertical direction.

It is to be noted here that Fig. 1 is highly schematic. The pivotable mounting of the first and second wheels W1, W2 is schematically depicted using a beam BE1 connecting the first wheel W1 to the chassis and using a beam BE2 connecting the second wheel W2 to the chassis. The connection between beams BE1 and BE2 and the respective wheels W1, W2 may be configured to allow the wheels W1, W2 to rotate about the first and second rotation axes RA1, RA2, respectively. The connection between beams BE1 and BE2 and the chassis may be configured to allow the wheels W1, W2 to pivot about the first and second pivot axis PA1, PA2, respectively. However, other implementations to provide the same functions of rotating and pivoting are also envisaged and may for instance depend on the suspension type.

The vehicle V further includes a first cylinder C1 and a second cylinder C2.

The first cylinder C1 comprises a cylinder housing CH1, a rod R1 moveably arranged inside the cylinder housing CH1 and connected to the first wheel W1 via beam BE1 such that pivoting of the first wheel W1 about the first pivot axis PA1 corresponds to translating of the rod R1, and a piston P1 mounted to the rod R1 inside the cylinder housing CH1 and separating a first chamber 11 from a second chamber 12.

The second cylinder C2 comprises a cylinder housing CH2, a rod R2 moveably arranged inside the cylinder housing CH2 and connected to the second wheel W2 via beam BE2 such that pivoting of the second wheel W2 about the second pivot axis PA2 corresponds to translating of the rod R2, and a piston P2 mounted to the rod R2 inside the cylinder housing CH2 and separating a first chamber 21 from a second chamber 22.

When the first wheel W1 and the second wheel W2 are not connected to each other, their movement is not synchronized. This may lead to stability and steering issues, especially in the case of Fig. 1. The configuration of the connection of the first and second wheels W1, W2 in the depicted form is such that the wheels W1 and W2 will continuously be urged to steer outwards on both sides when driving in forward moving direction. However, this may not be the case in other examples and embodiment in which the wheels W1 and W2 may be connected to the chassis similar to a caster which will urge the wheels W1 and W2 to a substantially center position. However, also in this case, stability and steering issues may arise during driving and maneuvering. It is possible to mechanically couple the beam BE1 and BE2, e.g. using a track rod, but this will occupy a lot of space in between the longitudinal beams LB1, LB2.

The solution according to the invention provides a first hydraulic line HL1 between the first chamber 11 of the first cylinder C1 and the first chamber 21 of the second cylinder C2. Movement of one piston inside the corresponding cylinder housing will increase or decrease the volume present in the respective first chamber. Due to the first hydraulic line HL1 and the hydraulic fluid in the first hydraulic line HL1 and both first chambers 11, 21, the increase or decrease of the volume in one first chamber will result in a corresponding decrease or increase in the volume in the other first chamber thereby synchronizing the motion of the two rods R1 and R2 and thus the pivotal motion of the first and second wheels W1, W2.

The solution according to the invention provides a second hydraulic line HL2 between the second chamber 12 of the first cylinder C1 and the second chamber 22 of the second cylinder C2. Movement of one piston inside the corresponding cylinder housing will increase or decrease the volume present in the respective second chamber. Due to the second hydraulic line HL2 and the hydraulic fluid in the second hydraulic line HL2 and both second chambers 12, 22, the increase or decrease of the volume of one second chamber will result in a corresponding decrease or increase in the volume in the other second chamber thereby synchronizing the motion of the two rods R1 and R2 and thus the pivotal motion of the first and second wheels W1, W2.

Due to the hydraulic connection between the first and second wheels W1, W2, provided by the first hydraulic line HL1 and the second hydraulic line HL2, the forces applied to one wheel are transferred to the other wheel and allowed to interact, resulting in an equilibrium between the two which prevents stability and steering issues.

Providing a hydraulic connection, i.e. the first hydraulic line HL1 filled and the second hydraulic line HL2 with hydraulic fluid, is not sufficient in a practical situation in which, due to leakage or other reasons, a deviation may be caused in the synchronization, which deviation may result in additional wear and tear of the wheels W1 and 2.

To this end, the vehicle V is provided with a hydraulic supply system HSS, a first centering device CD1, a second centering device CD2, and a control unit CU.

In this embodiment, the control unit CU is configured to control operation of the hydraulic supply system HSS. The hydraulic supply system HSS is configured to selectively supply hydraulic fluid to the first hydraulic line HL1 and/or the second hydraulic line HL2, the first centering device CD1 and the second centering device CD2, so that the control unit CU is able to control operation of the first and second centering devices CD1, CD2 via controlling the operation of the hydraulic supply system HSS.

The first and second centering devices CD1, CD2 are in this embodiment devices including a cylinder housing CH, a rod R moveably arranged inside the cylinder housing CH and connected to the rod R1, R2 of respectively the first and second cylinders C1, C2. Although the present example depicts a direct connection between the respective rods R and the corresponding rods R1, R2, an indirect connection is also envisaged, e.g. by connecting the rods R to the respective beams BE1, BE2. Connected to the rod R is a fixed piston FP to move along with the rod R. Moveably arranged around the fixed piston FP and the rod R is a moveable piston MP.

The moveable piston MP is configured to releasably engage with the fixed piston FP at one end and to releasably engage with the cylinder housing CH at an opposite end. The releasable engagement enables the fixed piston FP to move between two opposite sides of the cylinder housing CH to allow a respective wheel W1, W2 to rotate unhindered about the corresponding pivot axis PA1, PA2. However, when the moveable piston MP is brought into engagement with the cylinder housing CH and with the fixed piston FP, the position of the fixed piston FP and thus the respective rod R can be maintained in a fixed position. This fixed position preferably corresponds to a center position in which the rotation axis RA1, RA2 extends perpendicular to a longitudinal axis of the vessel V, which longitudinal axis is parallel to the forward FW and rearward RW directions, so that the vessel is able to drive/ride straight in the forward direction FW or rearward direction RW.

The fixed piston FP of the first centering device CD1 defines a first chamber 31 and a second chamber 32 connected to the hydraulic supply system HSS via respective hydraulic lines 33 and 34. The fixed piston FP of the second centering device CD2 defines a first chamber 41 and a second chamber 42 connected to the hydraulic supply system HSS via respective hydraulic lines 43 and 44.

The centering devices CD1, CD2 are configured such that pressurizing the first chambers 31, 41 urges the movable piston MP into engagement with the cylinder housing CH, and such that pressurizing the second chambers 32, 42 urges the fixed piston FP into engagement with the moveable piston MP and thus centers the rod R. Preferably, the applied forces to the moveable piston MP and the fixed piston FP are such that the fixed piston FP is not able to move the moveable piston MP out of engagement with the cylinder housing CH, e.g. due to a cross-section of the fixed piston FP being smaller than a cross-section of the moveable piston MP.

Although centering devices CD1, CD2 have been shown and described above using a specific example, it will be clear to the skilled person that other centering devices are also envisaged and the type of centering device is not essential to the invention.

The control unit CU may include one or more operational modes to control operation of the hydraulic supply system HSS as described below.

In a filling mode, which may be carried out during assembly, maintenance or repair, the first chambers 11, 21 and the first hydraulic line HL1 and/or the second chambers 12, 22 and the second hydraulic line HL2 are initially not or not completely filled with hydraulic fluid. The hydraulic supply system HSS is then operated to fill the first hydraulic line HL1 and first chambers 11 and 21 and/or the second hydraulic line HL2 and second chambers 12, 22 from a reservoir (not shown), e.g. by opening a filling valve of the hydraulic supply system HSS. Filling may include filling an accumulator of the hydraulic supply system HSS.

In a centering mode, the chambers 31, 32, 41 and 42 are pressurized by the hydraulic supply system HSS to force the first and second wheels W1, W2 into a straight-ahead orientation about respective pivot axes PA1, PA2.

In a normal driving mode, the chambers 31, 32, 41 and 42 are not pressurized allowing the wheels W1, W2 to pivot about respective pivot axes PA1, PA2, while the volume of hydraulic fluid in the first hydraulic line HL1 and the first chambers 11, 21, and the volume of hydraulic fluid in the second hydraulic line HL2 and the second chambers 12, 22 is kept constant, e.g. by preventing fluid communication from and to the first hydraulic line HL1 and by preventing fluid communication from and to the second hydraulic line HL2. However, exceptions may be allowed, such as:
- using an accumulator or similar device coupled to the first hydraulic line HL1 and/or the second hydraulic line HL2 allowing fluid communication from and to the first hydraulic line HL1 and/or the second hydraulic line HL2 albeit in relatively small amounts to compensate for leakage and/or to compensate for small deviations in cross-section of the first chambers 11, 21, the second chambers 12, 22, and/or to provide flexibility when hitting small road obstacles, and/or
- using a release valve allowing hydraulic fluid to escape in case of excessive oil or excessive pressure in the first hydraulic line HL1 and first chambers 11, 21, and/or the second hydraulic line HL2 and second chambers 12, 22, which may occur when there is internal leakage in one of the cylinders allowing hydraulic fluid in one chamber pass a piston and enter another chamber.

In a reset mode, the centering mode and the filling mode are combined. It is foreseeable that in due time, e.g. due to hydraulic fluid losses, deviations in the synchronization between the first wheel W1 and the second wheel W2 occur. As a result, both wheels W1, W2 are not oriented in the same direction causing additional wear and tear. When driving straight-ahead, applying the centering mode in combination with the filling mode will ensure that the wheels W1, W2 are synchronized again and any deviations are compensated for by allowing temporary fluid communication from or to the first hydraulic line HL1 and/or the second hydraulic line HL2. When the synchronization is reset, the control unit CU can return to the normal driving mode.

In an embodiment, the first hydraulic line HL1 and the first chambers 11, 21 are pressurized during normal driving mode. This allows to monitor the pressure in the first hydraulic line HL1 using a pressure sensor PS. A loss of pressure is then an indication that the synchronization between the two wheels W1, W2 may not be properly working allowing the control unit to go into safety mode which may be similar to the centering mode, but preferably with the provision of a warning signal to the driver that the normal driving mode is no longer available and thus maneuverability may be compromised. Additionally, or alternatively to the first hydraulic line HL1, a pressure sensor PS2 may be provided to monitor the pressure in the second hydraulic line HL2 allowing a safety mode to be initiated by the control unit CU when the pressure drops below a predetermined value.

In the reset mode, the centering mode may be combined with the filling mode, but it is also possible that in the reset mode, the centering mode is combined with an equalizing mode in which the first hydraulic line HL1 is brought in fluid communication with the second hydraulic line HL2 to equalize the pressures in the first hydraulic line HL1 and the second hydraulic line HL2, which may be sufficient to compensate for deviations in the desired synchronization, especially in the presence of an optional accumulator that may replenish relatively small amounts of leaked hydraulic fluid.

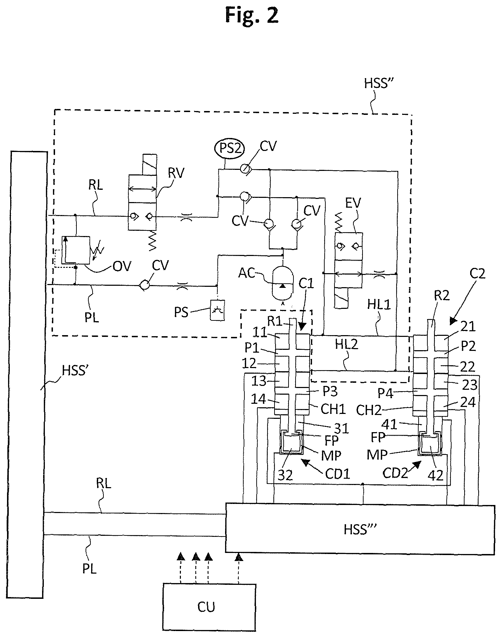

The embodiment of Fig. 1 provides passive steerability of the wheels W1 and W2, which may improve maneuverability of the vehicle compared to wheels W1 and W2 that are non-pivotable about a vertically extending pivot axis. An alternative embodiment including active steerability will be described below by reference to Fig. 2.

Fig. 2 depicts a hydraulic system for a vehicle, which vehicle may be similar to the vehicle of Fig. 1 and includes a pivotable first wheel and a pivotable second wheel. The first wheel is pivotable using a first cylinder C1 with rod R1. The second wheel is pivotable using a second cylinder C2 with rod R2.

The first cylinder C1 includes a cylinder housing CH1 with the rod R1 being arranged moveably inside the cylinder housing CH1. The cylinder housing CH1 comprises three portions, namely a track-rod portion, a steering portion, and a centering portion that are hydraulically separated from each other. The rod R1 is arranged inside the cylinder housing CH1 such that it extends into all three portions.

The track-rod portion of the first cylinder C1 comprises a piston P1 mounted to the rod R1 separating a first chamber 11 from a second chamber 12.

The steering portion of the first cylinder C1 comprises a piston P3 mounted to the rod R1 separating a third chamber 13 from a fourth chamber 14.

The centering portion of the first cylinder C1 includes a first centering device CD1 including a fixed piston FP mounted to the rod R1 and a moveable piston MP arranged around the rod R1 and the fixed piston FP separating a fifth chamber 31 from a sixth chamber 32. The moveable piston MP is configured to releasably engage with the fixed piston FP at one end and to releasably engage with the cylinder housing CH at an opposite end. The releasable engagement enables the fixed piston FP to move between two opposite sides of the centering portion of the cylinder housing CH1 to allow the rod R1 to move unhindered. However, when the moveable piston MP is brought into engagement with the cylinder housing CH1 and with the fixed piston FP, the position of the fixed piston FP and thus the rod R1 can be maintained in a fixed position, in this case the centered position.

The second cylinder C2 includes a cylinder housing CH2 with the rod R2 being arranged moveably inside the cylinder housing CH2. The cylinder housing CH2 comprises three portions, namely a track-rod portion, a steering portion, and a centering portion that are hydraulically separated from each other. The rod R2 is arranged inside the cylinder housing CH2 such that it extends into all three portions.

The track-rod portion of the second cylinder C2 comprises a piston P2 mounted to the rod R2 separating a first chamber 21 from a second chamber 22.

The steering portion of the second cylinder C2 comprises a piston P4 mounted to the rod R2 separating a third chamber 23 from a fourth chamber 24.

The centering portion of the second cylinder C2 includes a second centering device CD2 including a fixed piston FP mounted to the rod R2 and a moveable piston MP arranged around the rod R2 and the fixed piston FP separating a fifth chamber 41 from a sixth chamber 42. The moveable piston MP is configured to releasably engage with the fixed piston FP at one end and to releasably engage with the cylinder housing CH at an opposite end. The releasable engagement enables the fixed piston FP to move between two opposite sides of the centering portion of the cylinder housing CH2 to allow the rod R2 to move unhindered. However, when the moveable piston MP is brought into engagement with the cylinder housing CH2 and with the fixed piston FP, the position of the fixed piston FP and thus the rod R2 can be maintained in a fixed position, in this case the centered position.

The hydraulic system of Fig. 2 comprises three hydraulic supply subsystems, namely a first hydraulic supply system HSS', a second hydraulic supply system HSS", and a third hydraulic supply system HSS‴.

The first hydraulic supply system HSS' is configured to supply a pressure line PL and a return line RL to the second hydraulic supply system HSS" and the third hydraulic supply system HSS‴. The first hydraulic supply system HSS' may be connected to or comprise a pressure source, such as a pump or compressor, and/or a reservoir of hydraulic fluid. The first hydraulic supply system HSS' may include a valve to apply pressure to the pressure line PL between the first hydraulic supply system HSS' and the second hydraulic supply system HSS" or to apply pressure to the pressure line PL between the first hydraulic supply system HSS' and the third hydraulic supply system HSS‴.

The second hydraulic supply system HSS" is connected to the track-rod portions of the first cylinder C1 and the second cylinder C2 as will be explained below in more detail and includes an overpressure valve OV, a release valve RV, an accumulator AC, an equalizing valve EV, a first pressure sensor PS and a second pressure sensor PS2, and a plurality of check valves CV.

The check valves CV are configured to ensure that hydraulic fluid is flowing in the right direction and block hydraulic fluid flow in undesired directions.

The accumulator AC acts as a pressure storage reservoir to be filled by the first hydraulic supply system HSS' and allowing the second hydraulic supply system HSS" to function after filling when the first hydraulic supply system HSS' is no longer applying pressure to the pressure line PL between the first and second hydraulic supply systems.

The release valve RV has a normally-closed configuration meaning that by default this valve is closed preventing fluid communication, which in this embodiment is necessary to maintain a pressurized second hydraulic supply system HSS". The release valve RV can be operated to open by a control unit CU schematically depicted while omitting all connections. Opening the release valve RV may be done to release the pressure in the second hydraulic supply system HSS", e.g. for maintenance, or because the pressure becomes too high in the first or second chambers 11, 12, 21, 22 for instance due to (internal) leakage from a steering portion of the first or second hydraulic cylinder C1, C2 to a respective track-rod portion. Such overpressure may be detected using the second pressure sensor PS2, wherein the control unit may open the release valve RV when an output of the pressure sensor PS2 indicates a pressure value above a predetermined release value.

The overpressure valve OV provides a safety measurement for the second hydraulic supply system HSS" against a too high pressure provided by the first hydraulic supply system HSS'. Hence, when the pressure in the pressure line PL exceeds a predetermined value, the overpressure valve OV will open and release the pressure to the return line RL without subjecting the second hydraulic supply system HSS" to the too high pressure.

In this embodiment, the first chamber 11 of the first hydraulic cylinder C1 and the first chamber 21 of the second cylinder C2 are connected to each other using a first hydraulic line HL1. The second chamber 12 of the first hydraulic cylinder C1 and the second chamber 22 of the second cylinder C2 are connected to each other using a second hydraulic line HL2.

The equalizing valve EV provides a connection between the first hydraulic line HL1 and the second hydraulic line HL2. Similar to the release valve RV, the equalizing valve EV has a normally-closed configuration.

Upon filling of the second hydraulic supply system HSS" and the first and second chambers 11, 12, 21, 22 of the track-rod portions of the first and second cylinders C1, C2 and providing the release and equalizing valves RV, EV in the closed position, the hydraulic fluid in the first hydraulic line HL1 and the second hydraulic line HL2 is trapped thereby synchronizing movement of the rod R1 of the first cylinder C1 with movement of the rod R2 of the second cylinder C2.

When pressure drops or tends to drop in the first hydraulic line HL1 and/or the second hydraulic line HL2, e,g. due to leakage, the accumulator AC is able to maintain the pressure by applying hydraulic fluid to the first hydraulic line HL1 and/or the second hydraulic line HL2 over the respective check valves CV preventing hydraulic fluid from flowing back towards the accumulator AC. A pressure drop here, as measured by the first pressure sensor PS, also provides information about leakage in the first hydraulic line HL1 and/or the second hydraulic line HL2.

The third hydraulic supply system HSS‴ acts as a steering system controlled by the control unit CU. The third hydraulic supply system HSS‴ is pressurized via the first hydraulic supply system HSS'. The third hydraulic supply system HSS‴ includes hydraulic lines to the third chamber 13, the fourth chamber 14, the third chamber 23 and the fourth chamber 24 of the first and second cylinder C1, C2, respectively, to steer movement of the rods R1, R2 and thus the wheels connected thereto. The track-rod portions of the first and second cylinder C1, C2 and the second hydraulic supply system HSS" ensure the synchronized movement of the rods R1, R2 in a hydraulic manner.

The third hydraulic supply system HSS‴ also includes hydraulic lines to the centering devices CD1, CD2 allowing center the rods R1, R2 and thus to center the corresponding wheels.

However, it is foreseeable that in due time synchronization is lost due to internal and/or external leakages. Synchronization can then be restored by using the third hydraulic supply system HSS‴ to center the rods R1, R2 with the first and second centering devices CD1, CD2 and subsequently opening the equalizing valve EV to allow fluid communication between and equalize the pressures in the first hydraulic line HL1 and the second hydraulic line HL2, if necessary. Again, the accumulator AC will ensure that sufficient hydraulic fluid is present in the first hydraulic line HL1 and the second hydraulic line HL2. After closing the equalizing valve EV, the track-rod functionality is again applied with restored synchronization.

Although the first and second cylinder in the embodiment of Fig. 2 are provided with an integrated steering portion, the steering portions may alternatively be provided as separate steering cylinders, e.g. a first steering cylinder associated with the first cylinder and a second steering cylinder associated with the second cylinder.

## Claims

1. A hydraulic system comprising:
- a first cylinder (C1) with a cylinder housing (CH1), a rod (R1) moveably arranged inside the cylinder housing, and a piston (P1) mounted to the rod inside the cylinder housing and separating a first chamber (11) in the cylinder housing from a second chamber (12), wherein the first cylinder is connectable to a first wheel (W1) such that pivoting of the first wheel corresponds to translating of the rod relative to the cylinder housing,
- a second cylinder (C2) with a cylinder housing (CH2), a rod (R2) moveably arranged inside the cylinder housing, and a piston (P2) mounted to the rod inside the cylinder housing and separating a first chamber (21) in the cylinder housing from a second chamber (22), wherein the second cylinder is connectable to a second wheel (W2) such that pivoting of the second wheel corresponds to translating of the rod relative to the cylinder housing,
- a first hydraulic line (HL1) between the first chamber of the first cylinder and the first chamber of the second cylinder to synchronize motion of the rod of the first cylinder with motion of the rod of the second cylinder,
- a second hydraulic line (HL2) between the second chamber of the first cylinder and the second chamber of the second cylinder to synchronize motion of the rod of the first cylinder with motion of the rod of the second cylinder,
- a hydraulic supply system (HSS) configured to selectively supply hydraulic fluid to the first hydraulic line and the second hydraulic line,
- a first centering device (CD1) operable to urge the rod of the first cylinder to a center position,
- a second centering device (CD2) operable to urge the rod of the second cylinder to a center position, and
- a control unit (CU) to control operation of the hydraulic supply system, the first centering device, and the second centering device, wherein the control unit has a reset mode allowing to operate the hydraulic supply system while the first and second centering devices are operated to urge the rod of the first cylinder and the rod of the second cylinder, respectively, to their respective center positions to reset the synchronization between the motion of the rod of the first cylinder and the motion of the rod of the second cylinder.

2. A hydraulic system according to claim 1, wherein the hydraulic supply system comprises an equalizing valve (EV) between the first hydraulic line and the second hydraulic line allowing fluid communication between the first hydraulic line and the second hydraulic line at least during the reset mode of the control unit.

3. A hydraulic system according to claim 1 or 2, further comprising an accumulator (AC) connected to the first hydraulic line and/or the second hydraulic line.

4. A hydraulic system according to any of claims 1-3, further comprising a steering system to steer the first and second wheel.

5. A hydraulic system according to claim 4, wherein the steering system comprises a first steering cylinder connected to the first cylinder for steering the first wheel, and wherein preferably the first steering cylinder is integrated into the first cylinder, so that the first cylinder includes a track-rod portion housing the corresponding first chamber, the piston and the second chamber, and a steering portion with the corresponding third chamber (13), the fourth chamber (14), and the steering piston (P3), and wherein preferably the first steering cylinder forms the first centering device.

6. A hydraulic system according to claim 4 or 5, wherein the steering system comprises a second steering cylinder connected to the second cylinder for steering the second wheel, and wherein preferably the second steering cylinder is integrated into the second cylinder, so that the second cylinder includes a track-rod portion housing the corresponding first chamber, the piston and the second chamber, and a steering portion with the corresponding third chamber (23), the fourth chamber (24), and the steering piston (P4), and wherein preferably the second steering system forms the second centering device.

7. A hydraulic system according to any of claims 1-6, wherein the first cylinder and the first centering device form an integrated component.

8. A hydraulic system according to any of claims 1-7, wherein the second cylinder and the second centering device form an integrated component.

9. A vehicle (V) comprising:
- a pivotable first wheel (W1),
- a pivotable second wheel (W2), and
- a hydraulic system according to any of claims 1-8,
wherein the first cylinder (C1) is connected to the first wheel,
and wherein the second cylinder (C2) is connected to the second wheel.

10. A vehicle according to claim 9, further comprising a hydraulic pressure source to supply pressure to the hydraulic supply system.

11. A vehicle according to claim 9 or 10, wherein the first wheel is arranged at one side of the vehicle, and wherein the second wheel is arranged at an opposite side of the vehicle.

12. A method for operating a hydraulic system according to any of claims 1-8, wherein the method comprises the following steps:
a. filling the first hydraulic line (HL1) and the first chambers (11, 21) of the first and second cylinder (C2, C2), respectively, with hydraulic fluid,
b. filling the second hydraulic line (HL2) and the second chambers (12, 22) of the first and second cylinder (C1, C2), respectively, with hydraulic fluid
c. blocking hydraulic fluid flow from the first hydraulic line and the first chambers of the first and second cylinder,
d. blocking hydraulic fluid flow from the second hydraulic line and the second chambers of the first and second cylinder,
e. centering the rod (R1) of the first cylinder and centering the rod (R2) of the second cylinder, and
f. synchronizing movement of the rod of the first cylinder with the rod of the second cylinder by allowing fluid to flow in or out of the first hydraulic line and/or the second hydraulic cylinder when the rod of the first cylinder and the rod of the second cylinder are centered.

13. A method according to claim 12, wherein step f. is carried out by allowing fluid communication between the first hydraulic line and the second hydraulic line.

14. A method according to claim 12 or 13, wherein the hydraulic system is part of a vehicle (V) with the first cylinder connected to a pivotable first wheel (W1) and the second cylinder connected to a pivotable second wheel (W2), and wherein step c. and d. are carried out when the vehicle is driving straight-ahead substantially corresponding to a centered first cylinder and a centered the second cylinder.

15. A method according to any of claims 12-14, wherein in case a pressure in the first hydraulic line or a pressure in the second hydraulic line drops below a predetermined value, the first cylinder and the second cylinder are held centered.

## Patentansprüche

1. Ein Hydrauliksystem, umfassend:
- einen ersten Zylinder (C1) mit einem Zylindergehäuse (CH1), eine im Zylindergehäuse beweglich angeordnete Stange (R1), und einen im Zylindergehäuse an der Stange montierten Kolben (P1) der eine erste Kammer (11) im Zylindergehäuse von einer zweiten Kammer (12) trennt, wobei der erste Zylinder mit einem ersten Rad (W1) verbindbar ist, so dass das Schwenken des ersten Rads einer Translationsbewegung der Stange relativ zum Zylindergehäuse entspricht,
- einen zweiten zylinder (C2) mit einem Zylindergehäuse (CH2), eine im Zylindergehäuse beweglich angeordnete Stange (R2), und einen im Zylindergehäuse an der Stange montierten Kolben (P2), der eine erste Kammer (21) im Zylindergehäuse von einer zweiten Kammer (22) trennt, wobei der Zweite Zylinder mit einem zweiten Rad (W2) verbindbar ist, so dass das Schwenken des zweiten Rads einer Translationsbewegung der Stange relativ zum Zylindergehäuse entspricht,
- eine erste Hydraulikleitung (HL1) zwischen der ersten Kammer des ersten Zylinders und der ersten Kammer des zweiten Zylinders, um die Bewegung der Stange des ersten Zylinders mit der bewegung der Stange des zweiten Zylinders zu synchronisieren,
- eine zweite Hydraulikleitung (HL2) zwischen der zweiten Kammer des ersten Zylinders und der zweiten Kammer des zweiten Zylinders, um die Bewegung der Stange des ersten Zylinders mit der Bewegung der Stange des Zweiten Zylinders zu synchronisieren,
- ein Hydraulikversorgungssystem (HSS), dass so konfiguriert ist, dass es selektiv Hydraulikflüssigkeit liefert an die erste Hydraulikleitung und die zweite Hydraulikleitung,
- eine erste Zentriervorrichtung (CD1), die betreibbar ist um die Stange des ersten Zylinders in eine Mittelposition zu drücken,
- eine zweite Zentriervorrichtung (CD2), die bertreibbar ist um die Stange des zweiten Zylinders in eine Mittelposition zu drücken, und
- eine Steuereinheit (CU) zum steuern des Betriebs des Hydraulikversorgungssystems, der ersten Zentriervorrichtung und der zweiten Zentriervorrichtung, wobei die Steuereinheit wherein the control unit has a reset mode allowing to operate the hydraulic supply system while the first and second centering devices are operated to urge the rod of the first cylinder and the rod of the second cylinder, respectively, to their respective center positions to reset the synchronization between the motion of the rod of the first cylinder and the motion of the rod of the second cylinder.

2. Ein Hydrauliksystem nach Anspruch 1, wobei das Hydrauliversorgungssystem ein Ausgleichsventil zwischen der ersten Hydraulikleitung und der zweiten Hydraulikleitung umfasst, dass zumindest während des Rücksetzmodus der Steuereinheit eine Fluidverbindung zwischen der ersten Hydraulikleitung und der zweiten Hydraulikleitung ermöglicht.

3. Ein Hydrauliksystem nach Anspruch 1 oder 2, das ferner einen Akkumulator (AC) umfasst, der mit der ersten Hydraulikleitung und/oder der zweiten Hydraulikleitung verbunden ist.

4. Ein Hydrauliksystem nach einem der Ansprüche 1-3, das ferner ein Lenksystem zum Lenken des ersten und zweiten Rads umfasst.

5. Ein Hydrauliksystem nach Anspruch 4, wobei das Lenksystem einen ersten Lenkzylinder umfasst, der mit dem ersten Zylinder zum Lenken des ersten Rads verbunden ist, und wobei vorzugsweise der erste Lenkzylinder in den ersten Zylinder integriert ist, so dass der erste Zylinder einen Spurstangenabschnitt mit der entsprechenden ersten Kammer, dem Kolben und der zweiten Kammer sowie einen Lenkabschnitt mit der entsprechenden dritten Kammer (13), der vierten Kammer (14) und dem Lenkkolben (P3) umfasst, und wobei vorzugsweise der erste Lenkzylinder die erste Zentriervorrichtung bildet.

6. Ein Hydrauliksystem nach Anspruch 4 oder 5, wobei das Lenksystem einen zweiten Lenkzylinder umfasst, der mit dem zweiten Zylinder zum Lenken des zweiten Rads verbunden ist, und wobei vorzugsweise der zweite Lenkzylinder in den zweiten Zylinder integriert ist, so dass der zweite Zylinder einen Spurstangenabschnitt mit der entsprechenden ersten Kammer, dem Kolben und der zweiten Kammer sowie einen Lenkabschnitt mit der entsprechenden dritten Kammer (23), der vierten Kammer (24) und dem Lenkkolben (P4) umfasst, und wobei vorzugsweise das zweite Lenksystem die zweite Zentriervorrichtung bildet.

7. Ein Hydrauliksystem nach einem der Ansprüche 1-6, wobei der erste Zylinder und die erste Zentriervorrichtung eine integrierte Komponente bilden.

8. Ein Hydrauliksystem nach einem der Ansprüche 1-7, wobei der zweite Zylinder und die zweite Zentriervorrichtung eine integrierte Komponente bilden.

9. Ein Fahrzeug (V), umfassend:
- ein schwenkbares erstes Rad (W1),
- ein schwenkbares zweites Rad (W2), und
- ein Hydrauliksystem gemäss einem der Ansprüche 1-8,
wobei der erste Zylinder (C1) mit dem ersten Rad verbunden ist,
und wobei der zweite Zylinder (C2) mit dem zweiten Rad verbunden ist.

10. Ein Fahrzeug nach Anspruch 9, das ferner eine Hydraulikquelle umfasst, um das Hydraulikversorgunsgsystem mit Druck zu versorgen.

11. Ein Fahrzeug nac Anspruch 9 oder 10, wobei das erste Rad auf einer Seite des Fahrzeugs angeordnet ist und wobei das zweite Rad auf der gegenüberliegenden Seite des Fahrzeugs angeordnet ist.

12. Verfahren zum betreiben eines Hydrauliksystems nach einem der Ansprüche 1-8, wobei das Verfahren die folgenden Schritte umfasst:
a. Füllen der ersten Hydraulikleitung (HL1) und der ersten Kammern (11, 12) des ersten bzw. Zweiten Zylinders (C1, C2) mit Hydraulikflüssigkeit,
b. Füllen der zweiten Hydraulikleitung (HL2) und der zweiten Kammern (12, 22) des ersten bzw. Zweiten Zylinders (C1, C2) mit Hydraulikflüssigkeit,
c. Blockieren des Hydraulikflüssigkeitflusses aus der ersten Hydraulikleitung und den ersten Kammern des ersten und zweiten Zylinders,
d. Blockieren des Hydraulikflüssigkeitflusses aus der zweiten Hydraulikleitung und den zweiten Kammern des ersten und zweiten Zylinders,
e. Zentrieren der Stange (R1) des ersten Zylinders und Zentrieren der Stange (R2) des zweiten Zylinders, und
f. Synchronisieren der Bewegung der Stange des ersten Zylinders mit der Stange des zweiten Zylinders, indem Flüssigkeit in die erste Hydraulikleitung und/oder den zweiten Hydraulikleitung hinein- oder herausströmen kann, wenn die Stange des ersten Zylinders und die Stange des zweiten Zylinders zentriert sind.

13. Verfahren nach Anspruch 12, wobei Schritt f. durch zulassen einer Fluidverbindung zwischen der ersten Hydraulikleitung und der zweiten Hydraulikleitung ausgeführt wird.

14. Verfahren nach Anspruch 12 oder 13, wobei das Hydrauliksystem Teil eines Fahrzeugs (V) ist, bei dem der erste Zylinder mit einem schwenkbaren ersten Rad (W1) und der zweite Zylinder mit einem schwenkbaren zweiten Rad (W2) verbunden ist, und wobei Schritt c. und d. ausgeführt werden, wenn das Fahrzeug geradeaus fährt, was im Wesentlichen einem zentrierten ersten Zylinder und einem zentrierten zweiten Zylinder entspricht.

15. Verfahren nach einem der Ansprüche 12-14, wobei der erste Zylinder und der zweite Zylinder zentriert gehalten werden, wenn ein Druck in der ersten Hydraulikleitung oder ein Druck in der zweiten Hydraulikleitung unter einen vorbestimmten Wert fällt.

## Revendications

1. Système hydraulique comprenant:
- un premier cylindre (C1) avec un boîtier de cylindre (CH1), une tige (R1) disposée de manière mobile à l'intérieur du boîtier de cylindre, et un piston (P1) monté sur la tige à l'intérieur du boîtier de cylindre et séparant une première chambre (11) d'une deuxième chambre (12) dans le boîtier de cylindre, dans lequel le premier cylindre peut être relié à une première roue (W1) de telle sorte que le pivotement de la première roue corresponde à la translation de la tige par rapport au boîtier du cylindre,
- un deuxième cylindre (C2) avec un boîtier de cylindre (CH2), une tige (R2) disposée de manière mobile à l'intérieur du boîtier de cylindre, et un piston (P2) monté sur la tige à l'intérieur du boîtier de cylindre et séparant une première chambre (21) d'une deuxième chambre (22) dans le boîtier du cylindre, dans lequel le deuxième cylindre peut être relié à une deuxième roue (W2) de telle sorte que le pivotement de la deuxième roue corresponde à la translation de la tige par rapport au boîtier du cylindre,
- une première conduite hydraulique (HL1) entre la première chambre du premier cylindre et la première chambre du deuxième cylindre pour synchroniser le mouvement de la tige du premier cylindre avec le mouvement de la tige du deuxième cylindre,
- une deuxième conduite hydraulique (HL2) entre la deuxième chambre du premier cylindre et la deuxième chambre du deuxième cylindre pour synchroniser le mouvement de la tige du premier cylindre avec le mouvement de la tige du deuxième cylindre,
- un système d'alimentation hydraulique (HSS) configuré pour alimenter sélectivement en fluide hydraulique la première conduite hydraulique et la deuxième conduite hydraulique,
- un premier dispositif de centrage (CD1) permettant de pousser la tige du premier cylindre vers une position centrale,
- un deuxième dispositif de centrage (CD2) permettant de pousser la tige du deuxième cylindre vers une position centrale, et
- une unité de commande (CU) pour contrôler le fonctionnement du système d'alimentation hydraulique, du premier dispositif de centrage et du deuxième dispositif de centrage, dans lequel l'unité de commande ayant un mode de réinitialisation permettant de faire fonctionner le système d'alimentation hydraulique pendant que les premier et deuxième dispositifs de centrage sont actionnés pour pousser la tige du premier cylindre et la tige du deuxième cylindre, respectivement, vers leurs positions centrales respectives pour réinitialiser la synchronisation entre le mouvement de la tige du premier cylindre et le mouvement de la tige du duexième cylindre.

2. Système hydraulique selon la revendication 1, dans lequel le système d'alimentation hydraulique comprend une vanne d'égalisation (EV) entre la première conduite hydraulique et la deuxième conduite hydraulique, permettant une communication fluidique entre la première conduite hydraulique et la deuxième conduite hydraulique au moins pendant le mode de réinitialisation de l'unité de commande.

3. Système hydraulique selon la revendication 1 ou 2, comprenant en outre un accumulateur (AC) connecté à la première conduite hydraulique et/ou à la deuxième conduite hydraulique.

4. Système hydraulique selon l'une quelconque des revendications 1 à 3, comprenant en outre un système de direction pour diriger les première et deuxième roues.

5. Système hydraulique selon la revendication 4, dans lequel le système de direction comprend un premier cylindre de direction relié au premier cylindre pour diriger la première roue, et dans lequel, de préférence, le premier cylindre de direction est intégré au premier cylindre, de sorte qu'il comprend une partie biellette de direction abritant la première chambre correspondante, le piston et la deuxième chambre, et une partie direction avec la troisième chambre (13) correspondante, la quatrième chambre (14) et le piston de direction (P3), et dans lequel le premier cylindre de direction forme, de préférence, le premier dispositif de centrage.

6. Système hydraulique selon la revendication 4 ou 5, dans lequel le système de direction comprend un second cylindre de direction relié au duexième cylindre pour diriger la deuxième roue, et dans lequel, de préférence, le deuxième cylindre de direction est intégré au deuxième cylindre, de sorte qu'il comprend une partie biellette de direction abritant la première chambre correspondante, le piston et la seconde chambre, et une partie direction avec la troisième chambre (23) correspondante, la quatrième chambre (24) et le piston de direction (P4), et dans lequel le deuxième système de direction forme, de préférence, le second dispositif de centrage.

7. Système hydraulique selon l'une quelconque des revendications 1 à 6, dans lequel le premier cylindre et le premier dispositif de centrage forment un composant intégré.

8. Système hydraulique selon l'une quelconque des revendications 1 à 7, dans lequel le deuxième cylindre et le deuxième dispositif de centrage forment un composant intégré.

9. Véhicule (V) comprenant:
- une première roue (W1) pivotante,
- une deuxième roue (W2) pivotante, et
- un système hydraulique selon l'une quelconque des revendications 1-8,
dans lequel le premier cylindre (C1) est relié à la première roue,
et dans lequel le deuxième cylindre est relié à la deuxième roue.

10. Véhicule selon la revendication 9, comprenant en outre une source de pression hydraulique pour alimenter le système d'alimentation hydraulique.

11. Véhicule selon la revendication 9 ou 10, dans lequel la première roue est disposée d'un côté du véhicule et la deuxième roue est disposée d'un côté opposé du véhicule.

12. Procédé de fonctionnement d'un système hydraulique selon l'une quelconque des revendications 1 à 8, comprenant les étapes suivantes:
a. remplir la première conduite hydraulique (HL1) et les premières chambres (11, 21) des premier et deuxième cylindres (C2, C2), respectivement, avec du fluide hydraulique,
b. remplir la deuxième conduite hydraulique (HL2) et les deuxièmes chambres (12, 22) des premier et deuxième cylindres (C1, C2), respectivement, avec du fluide hydraulique,
c. bloquer le débit du fluide hydraulique provenant de la première conduite hydraulique et des premières chambres du premier et du deuxième cylindres,
d. bloquer le débit du fluide hydraulique provenant de la deuxième conduite hydraulique et des deuxièmes chambres des premier et deuxième cylindres,
e. centrant la tige (R1) du premier cylindre et centrant la tige (R2) du deuxième cylindre, et
f. synchroniser le mouvement de la tige du premier cylindre avec la tige du deuxième cylindre en permettant au fluide de s'écouler dans ou hors de la première conduite hydraulique et/ou du deuxième cylindre hydraulique lorsque la tige du premier cylindre et la tige du deuxième cylindre sont centrées.

13. Procédé selon la revendication 12, dans lequel l'étape f. est réalisée en permettant une communication fluidique entre la première et la deuxième conduite hydraulique.

14. Procédé selon la revendication 12 ou 13, dans lequel le système hydraulique fait partie d'un véhicule (V) dont le premier cylindre est relié à une première roue (W1) pivotante et le deuxième cylindre à une deuxième roue (W2) pivotante, et dans lequel les étapes c. et d. sont réalisées lorsque le véhicule roule en ligne droite, correspondant sensiblement à un premier cylindre centré et à un deuxième cylindre centré.

15. Procédé selon l'une quelconque des revendications 12 à 14, dans lequel, si la pression dans la première conduite hydraulique ou dans la seconde conduite hydraulique chute en dessous d'une valeur prédéterminée, le premier et le deuxième cylindre sont maintenus centrés.
